# EUROPEAN PATENT SPECIFICATION

(11) **EP 2 468 476 B1**
(45) Date of publication and mention of the grant of the patent: **03.08.2016**
(21) Application number: 11193999.7
(22) Date of filing: 16.12.2011
(51) Int. Cl.: B29C 47/50, B29K 21/00

(54) **Method for forming tyre components**
Verfahren zum Extrudieren von Reifenkomponenten
Procédé de formation de composés de pneu

(30) Priority: 22.12.2010 US 42581610 P; 01.07.2011 US 201113175030
(43) Date of publication of application: 27.06.2012
(73) Proprietor: The Goodyear Tire & Rubber Company, Akron, OH 44316-0001 (US)
(72) Inventor: Burg, Gary Robert, Massillon, OH Ohio 44646 (US); Dyrlund, Christopher David, Canton, OH Ohio 44705 (US); Koch, Brian Richard, Hartville, OH Ohio 44632 (US)
(74) Representative: Kutsch, Bernd

(56) References cited:
- EP-A1- 2 039 492
- EP-A1- 2 338 662
- EP-A2- 0 970 797
- WO-A1-03/035367
- JP-A- 10 156 925
- JP-A- 2006 181 775
- US-A1- 2010 142 310

## Description

### Field of the Invention

The invention relates in general to tire manufacturing, and more particularly to a method for forming tire components.

### Background of the Invention

Tire manufacturers have progressed to more complicated designs due to an advance in technology as well as a highly competitive industrial environment. In particular, tire designers seek to use multiple rubber compounds in a tire in order to meet customer demands. Using multiple rubber compounds per tire can result in a huge number of compounds needed to be on hand for the various tire lines of the manufacturer. For cost and efficiency reasons, tire manufacturers seek to limit the number of compounds available due to the extensive costs associated with each compound. Each compound typically requires the use of a Banbury mixer, which involves expensive capital expenditures. Furthermore, Banbury mixers have difficulty mixing up tough or stiff rubber compounds. The compounds generated from the Banbury mixers are typically shipped to the tire building plants, thus requiring additional costs for transportation. The shelf life of the compounds is not finite, and if not used within a certain time period, is scrapped.

Thus an improved method is desired which substantially reduces the need for the use of Banbury mixers while providing an apparatus and methodology to provide custom mixing at the tire building machine by blending of two or more compounds together, and controlling the ratio of the compounds and other additives. Both non-productive compounds and productive compounds could be blended together. It is further desired to have a system at the tire building machine which provides for the ability to manufacture customizable compounds with accelerators. Yet an additional problem to be solved is to generate the compounds continuously at the tire building machine.

Tire components which have small cross-sectional area profiles and vary in material are particularly challenging to manufacture at the tire building machine. Thus it is desired to have an improved method and apparatus for manufacturing tire components at the tire building machine.

JP-A- 10-156925 describes an apparatus for applying a mixture of a first compound and a second compound, the apparatus comprising a first extruder with a first gear pump and a second extruder with a second gear pump, wherein the outlet of the first and second gear pumps is in fluid communication with an inlet of a main extruder.

An extrusion conveying device having a main extruder and a plurality of subsidiary conveyers feeding material into the main extruder is described in US-A-2010/0142310.

EP-A- 2 338 662, which is published only after the priority date of this application, describes a method and an apparatus for forming a rubber article comprising a plurality of extruders followed by gear pumps feeding a main extruder at various inlets of the main extruder.

EP-A-2 039 492 describes a main extruder followed by a gear pump with the main extruder having a plurality of side extruders each followed by a respective pump. The side extruders are positioned along the shaft of the main extruder.

EP-A-0 970 797 describes a method and apparatus for the lamination of band-shaped uncured rubber materials using a main extruder provided with two or more rubber feeding devices individually feeding three uncured rubber materials into this extruder. A feed control means is provided so that each of the different rubber materials passed through the feed control means is fed into the extruder through a hopper and a feeder.

### Summary of the Invention

The invention related to a method in accordance with claim 1.

Dependent claims refer to preferred embodiments of the invention.

### Definitions

"Productive compound" means a rubber compound that includes accelerators, sulfur and other materials needed to cure the rubber.

"Non-productive compound" means a rubber compound that does not have one or more of the following items: 1) accelerator; 2) sulfur; or 3) curing agent(s).

### Brief Description of the Drawings

The invention will be described by way of example and with reference to the accompanying drawings in which:
FIG. 1 is a schematic of a mixing system for use with the present invention.
FIG. 2 is a schematic of a second embodiment for use with the present invention.

### Detailed Description of the Invention

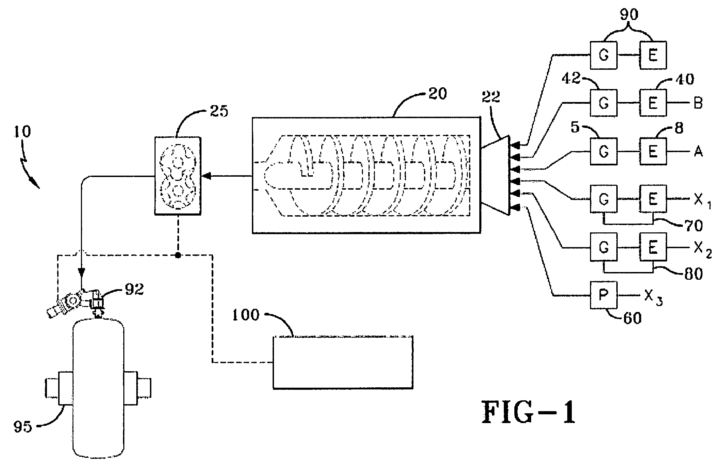

Figure 1 illustrates a first embodiment of a method and apparatus 10 for a continuous mixing system suitable for use for making rubber compositions for tires or tire components. The continuous mixing system 10 is not limited to tire applications and may be used for example, to make other rubber components not related to tires such as conveyors, hoses, belts, etc. The continuous mixing system is particularly suited for making small tire components having a varying composition, such as inserts, apexes and treads (including those for retreaded tires). The mixing system may be provided directly at the tire or component building station for direct application of the rubber composition to a tire building drum or other component building apparatus. As shown in Figure 1, the continuous mixing apparatus 10 includes a main extruder 20. The main extruder 20 has an inlet 22 for receiving one or more rubber compositions as described in more detail, below. The main extruder may comprise any commercial extruder suitable for processing of rubber or elastomer compounds. The extruder may comprise a commercially available extruder commonly known by those skilled in the art as a pin type extruder, a twin screw or a single screw extruder, or a ring type of extruder. One commercially available extruder suitable for use is a multicut transfermix (MCT) extruder, sold by VMI Holland BV, The Netherlands. Preferably, the extruder has a length to diameter ratio (UD) of 5, but may range from 3 to 5. A ring type, pin type or MCT type of extruder is preferred, but is not limited to same. Preferably, the main extruder 20 is a ring extruder with at least 8, more preferably, at least 12 concentric shafts.

The main extruder 20 functions to warm up the compound A to the temperature in the range of 80°C to 150°C, preferably 90°C to 120°C, and to masticate the rubber composition as needed.

The main extruder inlet 22 receives a first compound A, which may be a productive or non-productive rubber composition. Examples of compound A compositions are described in more detail, below. Compound A is first extruded by a first extruder 8 and a first pump 5, namely a gear pump. The extruder 8 may be a conventional pin type, ring type, dual screw or single screw type extruder. The pump 5 functions as a metering device and a pump and may have gears such as planetary gears, bevel gears or other gears. The extruder 8 and gear pump 5 may also be a combination unit. Preferably, the extruder 8 has an UD of 3, but may range from 3 to 6.

A second compound, referred to as "Compound B" also enters the main extruder 20 at the inlet 22 and is mixed together with compound A as the compounds travel through the main extruder. Compound B may also comprise a productive or non-productive rubber composition. Examples of compound B compositions are described in more detail, below. Compound B is first extruded by second extruder 40 and a second pump 42, namely a gear pump. The extruder 40 may be a conventional pin type, ring type, dual screw or single screw type extruder. The pump 42 functions as a metering device and a pump and may have gears such as planetary gears, bevel gears or other gears. The extruder 40 and gear pump 42 may also be a combination unit. Preferably, the extruder 40 has an UD of 3, but may range from 3 to 6.

The main extruder 20 blends compound A and compound B together in a precisely controlled amount. Oil may also be optionally injected into the main extruder 22 via an oil pump 60. The oil pump may be located at any desired location, but is preferably located at the inlet 22. The oil controls the viscosity of the compound mixture.

The apparatus 10 further includes a first additive pump 70 for pumping one or more additives such as a primary accelerator, which is added to the mixture at the main extruder inlet 22. The apparatus may further include a second additive pumping device 80 for pumping one or more additives such as a secondary accelerator into the main extruder inlet 22. The additive pumps 70, 80 are gear pumps.

If more than one accelerator is used, they may be added into the mixture separately or together. For example, a primary accelerator and a secondary accelerator may both be added. Accelerators are used to control the time and/or temperature required for vulcanization and to improve the properties of the rubber. The accelerator may be in powder form or an encapsulated powder into a resin or rubber base. Examples of accelerator compositions are described in more detail, below.

Other additives include a curative agent or precursor, which may also be added to the mixer via additive pump 90. One example of a curative agent is sulfur. The sulfur may be added in solid form. The additive pump 90 may be a gear pump, gear pump extruder combination, Venturi pump or other pumping means known to those skilled in the art.

Thus all of the constituents including compound A, compound B, sulfur, oil and any desired curative agents or precursors, or accelerators of the desired rubber composition are added to the inlet of the main extruder 20. The main extruder blends all the constituents together and produces an output mixture of compound C which is a precise mixture of the A and B compound, optional oil the optional accelerant and optional additives. The output mixture of compound C exits the main extruder and enters a gear pump 25. The gear pump 25 and main extruder 20 is preferably located in close proximity adjacent a tire component building station or tire building station 95 for direct application onto a core, mandrel, blank or tire building drum, as shown in Figure 1. Gear pump 25 preferably has a special nozzle 92 or shaping die which applies the compound formulation output from the mixer exit directly onto the tire building machine 95 in strips which are wound onto a tire building drum or core.

The ratio of the volumetric flow rate of compound A to the volumetric flow rate of compound B is precisely controlled by the ratio of the speed of the gear pump 5 for compound A and the speed of gear pump 42 for compound B. For example, the compound output from the system 10 may comprise a ratio of 20% of compound A and 80% of compound B by volume, as shown in Figure 3. Alternatively, the compound output from the system may comprise a mixture D having a ratio of 35% of compound B and 65% of compound A by volume. Alternatively, the compound output from the system may comprise a mixture Z having a ratio of 10% of compound B and 90% of compound A by volume. The ratio of compound A to compound B can thus range from 0:100% to 100%:0. The ratio may be adjusted instantaneously by varying the speeds of gear pumps 25 and 42 by a computer controller 100. The computer controller 100 may additionally controls the extruder and gear pump operating parameters such as operating pressure, operating temperature, pump or screw speed.

Preferably, the computer controller 100 sets a pressure target value for the exit pressure of each extruder. The extruder speed is controlled by the controller, and is varied until the pressure target is met. The pressure target value affects the quality of mixing by causing backflow of the material in the extruder.

The system 10 has a short residence time due to the following design features. First, all the components of compound C are added at the inlet of the main extruder. Because all the ingredients are added at the exact same location, precise formulations can be generated and controlled. Second, each extruder has a low length to diameter ratio. Third, the system is preferably located adjacent a component building station or tire building station to minimize the system line lengths in order to further reduce system residence time.

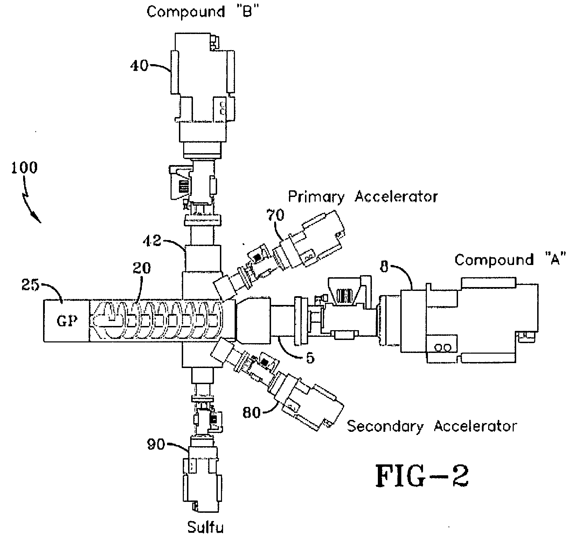

Figure 2 illustrates another extruder apparatus Everything is the same as described above, except for the following. Compound A is fed into the inlet 22 of the main extruder 20. Compound B passes through an extruder 40 in combination with a gear pump 42 as described above, and then is fed into the main extruder at a specific upstream location identified herein for reference purposes as "L." A primary accelerator is pumped through a pumping device 70 and enters the main extruder at the same location L. An optional secondary accelerator passes through a pumping device 80 and then enters the main extruder 20 at the same location L. Other additives include a curative agent or precursor, which may also be added to the mixer at location L via additive pump 90. Thus the addition of all the ingredients at the same extruder location allows for precise control of the compound constituents. The following are compositions which may be used in conjunction with the invention.

### I. Accelerator Compositions

In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanized rubber. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

### II. Rubber Compositions

Representative rubbers that may be used in the rubber compound include acrylonitrile/diene copolymers, natural rubber, halogenated butyl rubber, butyl rubber, cis-1,4-polyisoprene, styrene-butadiene copolymers, cis-1,4-polybutadiene, styrene-isoprene-butadiene terpolymers ethylene-propylene terpolymers, also known as ethylene/propylene/diene monomer (EPDM), and in particular ethylene/propylene/dicyclopentadiene terpolymers. Mixtures of the above rubbers may be used. Each rubber layer may be comprised of the same rubber composition or alternating layers may be of different rubber composition.

The rubber compound may contain a platy filler. Representative examples of platy fillers include talc, clay, mica and mixture thereof. When used, the amount of platy filler ranges from 25 to 150 parts per 100 parts by weight of rubber (hereinafter referred to as phr). Preferably, the level of platy filler in the rubber compound ranges from 30 to 75 phr.

The various rubber compositions may be compounded with conventional rubber compounding ingredients. Conventional ingredients commonly used include carbon black, silica, coupling agents, tackifier resins, processing aids, antioxidants, antiozonants, stearic acid, activators, waxes, oils, sulfur vulcanizing agents and peptizing agents. As known to those skilled in the art, depending on the desired degree of abrasion resistance, and other properties, certain additives mentioned above are commonly used in conventional amounts. Typical additions of carbon black comprise from a10 to 150 parts by weight of rubber, preferably 50 to 100 phr. Typical amounts of silica range from 10 to 250 parts by weight, preferably 30 to 80 parts by weight and blends of silica and carbon black are also included. Typical amounts of tackifier resins comprise from 2 to 10 phr. Typical amounts of processing aids comprise 1 to 5 phr. Typical amounts of antioxidants comprise 1 to 10 phr. Typical amounts of antiozonants comprise 1 to 10 phr. Typical amounts of stearic acid comprise 0.50 to 3 phr. Typical amounts of accelerators comprise 1 to 5 phr. Typical amounts of waxes comprise 1 to 5 phr. Typical amounts of oils comprise 2 to 30 phr. Sulfur vulcanizing agents, such as elemental sulfur, amine disulfides, polymeric polysulfides, sulfur olefin adducts, and mixtures thereof, are used in an amount ranging from 0.2 to 8 phr. Typical amounts of peptizers comprise from 0.1 to 1 phr.

### III. Oil

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

## Claims

1. A method of applying a blended rubber composition directly onto a tire building drum or core, the method comprising the steps of:
providing a first extruder (8) and a first gear pump (5) for a first compound (A) and processing the first compound (A) through the first extruder (8) and then the first gear pump (5);
providing a second extruder (40) and a second gear pump (42) for a second compound (B) and processing the second compound (B) through the second extruder (40) and then the second gear pump (42);
directing the first compound (A) from the outlet of the first gear pump (5) into an inlet of a main extruder (20);
directing the second compound (B) from the outlet of the second gear pump (42) into said inlet of the main extruder (20);
providing a third extruder and a third gear pump for an accelerator mixture;
directing the accelerator mixture through the third extruder and the third gear pump and into the main extruder (20);
extruding the first compound (A), the second compound (B) and the accelerator mixture through the main extruder (20) and by using a main gear pump (25) in fluid communication with an outlet of the main extruder (20) thereby forming a third compound (C); and
applying the third compound (C) in one or more strips directly onto a tire building device (95).

2. The method of claim 1 further comprising:
providing a fourth extruder and a fourth gear pump for an additive;
directing the additive through the fourth extruder and into the fourth gear pump;
pumping the additive into the main extruder (20).

3. The method of claim 1 or 2 wherein oil is pumped into the main extruder (20).

4. The method of claim 1, 2 or 3 wherein the line length from the main extruder (20) to the device (95) is minimized.

5. The method of at least one of the claims 1 to 4 wherein the main extruder (20) has an UD in the range of from 3 to 5.

6. The method of at least one of the claims 1 to 5 wherein the main extruder (20) is a multi-shaft extruder, preferably a ring extruder comprises at least six parallel screws, alternatively at least 8 or at least parallel 12 screws, jointly turning clockwise or anti-clockwise in the same or different directions.

7. The method of at least one of the claims 1 to 6 wherein at least one of the first compound (A), the second compound (B), the accelerator mixture, the additive and the oil, preferably the first compound (A), the second compound (B), the accelerator mixture, the additive and the oil, is directed into the inlet (22) or the same inlet of the main extruder (20).

## Patentansprüche

1. Verfahren zum Anbringen einer gemischten Kautschukzusammensetzung direkt auf einer Reifenbautrommel oder -kern, wobei das Verfahren folgende Schritte umfasst:
Vorsehen eines ersten Extruders (8) und einer ersten Zahnradpumpe (5) für eine erste Mischung (A) und Weiterverarbeiten der ersten Mischung (A) durch den ersten Extruder (8) und dann die erste Zahnradpumpe (5);
Vorsehen eines zweiten Extruders (40) und einer zweiten Zahnradpumpe (42) für eine zweite Mischung (B) und Weiterverarbeiten der zweiten Mischung (B) durch den zweiten Extruder (40) und dann die zweite Zahnradpumpe (42);
Leiten der ersten Mischung (A) vom Auslass der ersten Zahnradpumpe (5) in einen Einlass eines Hauptextruders (20);
Leiten der zweiten Mischung (B) vom Auslass der zweiten Zahnradpumpe (42) in besagten Einlass des Hauptextruders (20);
Vorsehen eines dritten Extruders und einer dritten Zahnradpumpe für ein Beschleunigungsmittelgemisch;
Leiten des Beschleunigungsmittelgemischs durch den dritten Extruder und die dritte Zahnradpumpe und in den Hauptextruder (20);
Extrudieren der ersten Mischung (A), der zweiten Mischung (B) und des Beschleunigungsmittelgemischs durch den Hauptextruder (20) und durch Anwendung einer Haupt-Zahnradpumpe (25) in Fluidkommunikation mit einem Auslass des Hauptextruders (20), wodurch eine dritte Mischung (C) gebildet wird; und
Anbringen der dritten Mischung (C) in einem oder mehreren Streifen direkt auf einer Reifenaufbauvorrichtung (95).

2. Verfahren nach Anspruch 1, weiter umfassend:
Vorsehens eines vierten Extruders und einer vierten Zahnradpumpe für ein Additiv;
Leiten des Additivs durch den vierten Extruder und in die vierte Zahnradpumpe;
Pumpen des Additivs in den Hauptextruder (20).

3. Verfahren nach Anspruch 1 oder 2, wobei Öl in den Hauptextruder (20) gepumpt wird.

4. Verfahren nach Anspruch 1, 2 oder 3, wobei die Produktionslinienlänge von dem Hauptextruder (20) zu der Vorrichtung (95) minimiert ist.

5. Verfahren nach mindestens einem der Ansprüche 1 bis 4, wobei der Hauptextruder (20) ein Verhältnis von Länge zu Durchmesser (L:D) im Bereich von 3 bis 5 aufweist.

6. Verfahren nach mindestens einem der Ansprüche 1 bis 5, wobei der Hauptextruder (20) ein Mehrwellenextruder ist, bevorzugt ein Ringextruder, umfassend mindestens sechs parallele Schrauben, alternativ mindestens 8 oder mindestens parallel 12 Schrauben, die sich gemeinsam im Uhrzeigersinn oder im Gegenuhrzeigersinn in derselben oder verschiedenen Richtungen drehen.

7. Verfahren nach mindestens einem der Ansprüche 1 bis 6, wobei mindestens eines der ersten Mischung (A), der zweiten Mischung (B), des Beschleunigungsmittelgemischs, des Additivs und des Öls, bevorzugt die erste Mischung (A), die zweite Mischung (B), das Beschleunigungsmittelgemisch, das Additiv und das Öl, in den Einlass (22) oder denselben Einlass des Hauptextruders (20) geleitet wird.

## Revendications

1. Procédé pour l'application d'une composition de caoutchouc qui a été soumise à un mélange intime, directement sur une partie centrale ou sur un tambour de confection de bandage pneumatique, le procédé comprenant les étapes dans lesquelles :
on procure une première extrudeuse (8) et une première pompe à engrenages (5) pour un premier composé (A) et on traite le premier composé (A) à travers la première extrudeuse (8) et ensuite à travers la première pompe à engrenages (5) ;
on procure une deuxième extrudeuse (40) et une deuxième pompe à engrenages (42) pour un deuxième composé (B) et on traite le deuxième composé (B) à travers la deuxième extrudeuse (40) et ensuite à travers la deuxième pompe à engrenages (42) ;
on dirige le premier composé (A) à partir de la sortie de la première pompe à engrenages (5) jusque dans une entrée d'une extrudeuse principale (20) ;
on dirige le deuxième composé (B) à partir de la sortie de la deuxième pompe à engrenages (42) jusque dans ladite entrée de l'extrudeuse principale (20) ;
on procure une troisième extrudeuse et une troisième pompe à engrenages pour un mélange d'accélérateurs ;
on dirige le mélange d'accélérateurs à travers la troisième extrudeuse et à travers la troisième pompe à engrenages jusque dans l'extrudeuse principale (20) ;
on extrude le premier composé (A), le deuxième composé (B) et le mélange d'accélérateurs à travers l'extrudeuse principale (20) et en utilisant une pompe principale à engrenages (25) qui est mise en communication par fluide avec une sortie de l'extrudeuse principale (20) pour ainsi obtenir un troisième composé (C) ; et
on applique le troisième composé (C) sous la forme d'une ou de plusieurs bandes directement sur un dispositif de confection de bandage pneumatique (85).

2. Procédé selon la revendication 1, comprenant en outre le fait de:
procurer une quatrième extrudeuse et une quatrième pompe à engrenages pour un additif ;
diriger l'additif à travers la quatrième extrudeuse jusque dans la quatrième pompe à engrenages ;
introduire par pompage l'additif dans l'extrudeuse principale (20).

3. Procédé selon la revendication 1 ou 2, dans lequel on introduit de l'huile par pompage dans l'extrudeuse principale (20).

4. Procédé selon la revendication 1, 2 ou 3, dans lequel on minimise la longueur linéaire entre l'extrudeuse principale (20) et le dispositif (95).

5. Procédé selon l'une quelconque des revendications 1 à 4, dans lequel l'extrudeuse principale (20) possède un rapport L/D dans la plage de 3 à 5.

6. Procédé selon l'une quelconque des revendications 1 à 5, dans lequel l'extrudeuse principale (20) est une extrudeuse du type à plusieurs arbres, de préférence une extrudeuse annulaire comprenant six vis parallèles, en variante au moins 8 ou au moins 12 vis parallèles, qui tournent de manière conjointe dans le sens des aiguilles d'une montre ou dans le sens contraire à celui des aiguilles d'une montre dans la même direction ou dans des directions différentes.

7. Procédé selon l'une quelconque des revendications 1 à 6, dans lequel au moins un élément choisi parmi le premier composé (A), le deuxième composé (B), l'additif et l'huile, de préférence le premier composé (A), le deuxième composé (B), le mélange d'accélérateurs, l'additif et l'huile, est dirigé jusque dans l'entrée (22) ou jusque dans la même entrée de l'extrudeuse principale (20).
